Europäisches Patentamt

European Patent Office

Office européen des brevets

(11) Publication number: **0 334 456**
A1

(12) **EUROPEAN PATENT APPLICATION**

(21) Application number: 89200730.3

(51) Int. Cl.4: **B66F 7/24**

(22) Date of filing: 21.03.89

(30) Priority: 22.03.88 NL 8800708

(43) Date of publication of application:
27.09.89 Bulletin 89/39

(84) Designated Contracting States:
AT BE CH DE ES FR GB GR IT LI LU NL SE

(71) Applicant: QUICKWHEEL INTERNATIONAL B.V.
Beurs World Trade Centre 37, Beursplein
NL-3011 AA Rotterdam(NL)

(72) Inventor: Smeitink, Jan
11, Henseniusstraat
NL-5801 AW Venray(NL)

(74) Representative: Mommaerts, Johan Hendrik,
Dipl.-Phys. et al
Exterpatent B.V. Postbus 90649
NL-2509 LP Den Haag(NL)

(54) **Wheel trolley.**

(57) The present invention relates to a wheel trolley
for supporting a wheel of a vehicle so that the latter
can be moved without the tyre touching the ground.
More specifically, the trolley of the present invention
comprises a foldable frame (1) equipped with at
least one front wheel (5) and two rear wheels (6), self
adjusting and locking front and rear flaps (15, 7)
provided with pawls (21, 20) adapted to engage pawl
teeth (23, 22) on said frame (1) for locking the flap in
question in a position adapted to the wheel. In par-
ticular sad front flap (15) is provided with a plurality
of parallel rows of rollers (26), and outermost rollers
(26') can be bevelled to help center the vehicle tyre
on the trolley and to minimize the tendency of the
vehicle tire to roll out of the trolley.

EP 0 334 456 A1

FIG. 1.

Xerox Copy Centre

## Wheel trolley

The invention relates to a wheel trolley for a wheel of a motor vehicle, comprising a frame with at least one front wheel and two rear wheels, a hinged front flap and a hinged rear flap, said flaps being adapted to bear, in the raised position, against the tyre of a wheel driven on said frame, the rear flap being adapted to be swung downwards and then forming a drive-on ramp for said wheel, said rear flap, when said wheel rolls past the hinge axis, swinging towards the raised position, said wheel then contacting the part of said front flap behind its hinge axis so that said flap will swing towards its raised position.

Such a wheel trolley is known from NL-A 86 01 172, and serves to support a wheel with a punctured tyre or other damage, so that it is possible to drive on without changing said wheel.

In this known wheel trolley the frame is provided with a hinge axis which is situated in such a manner that said frame can be folded and the trolley occupies less space. Although this known trolley has satisfied well, a disadvantage thereof is that the flaps are maintained in their raised position only by the weight of the vehicle or are to be locked by hand in the desired position, and in the case of a driven wheel it will be possible that at a given acceleration the wheel will drive upwards on the front flap so that it might become free.

The object of the invention is to provide an improvement of this wheel trolley, and is, to that end, characterised in that said flaps are provided with pawls which, when swinging upwards the flap in question, will engage corresponding pawl teeth on said frame in order to lock said flaps in a position adapted to said wheel.

Said locking takes place automatically as soon as the wheel has been driven on the trolley and the flaps have assumed an adapted position, so that no further operations are required for locking said flaps in a safe position, regardless of the diameter of the wheel in question.

In order to avoid that, in spite of the fixed position of the front flap, a driven wheel will roll out of the trolley, in particular said front flap can be provided with freely rotatable rollers, at least a part thereof contacting, in the raised position of said flap, the tyre of said wheel.

In order to provide a good alignment of the wheel, several parallel rows of rollers can be provided, the outer ones thereof being conically bevelled, the narrower part thereof being directed towards the longitudinal median plane of said frame, so that said outer rollers will laterally contact the tread of the tyre.

The invention will be elucidated below in more detail by reference to the drawing, showing in:

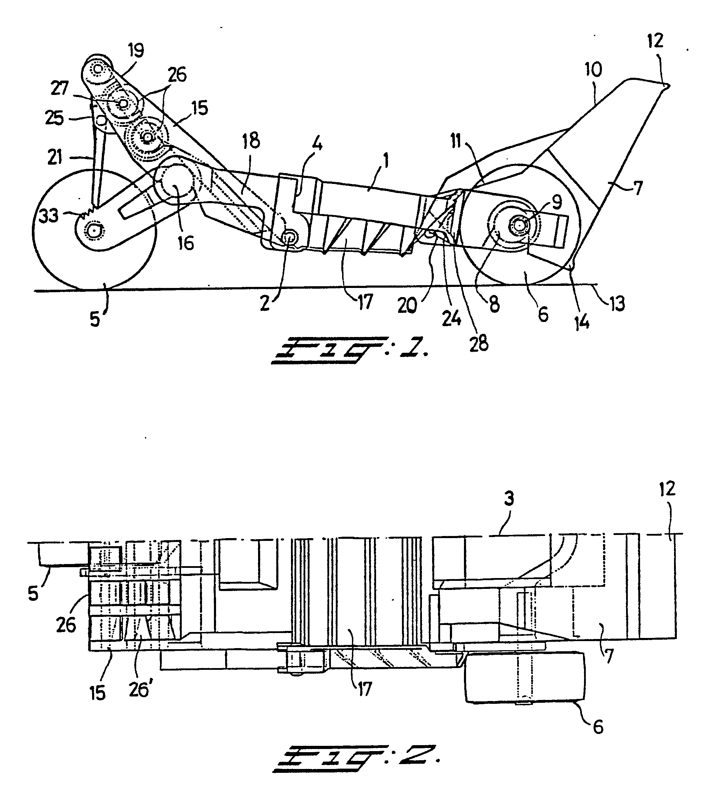

Fig. 1 a side view of a wheel trolley according to the invention, and Fig. 2 a partial top view of said trolley.

The trolley as shown comprises frame 1 provided with a hinge axle 2 which is oriented transversely to the longitudinal median plane 3 of the frame and which allows to collapse the trolley. In the operational position illustrated in Fig. 1, support surfaces 4 of the two parts of the frame 1 rest against each other in order to maintain the illustrated position under the weight of a wheel resting on the trolley.

The trolley has one front wheel 5 and two rear wheels 6, and in the collapsed position the front wheel 5 comes to rest between the two rear wheels 6.

The trolley further comprises a rear flap 7 rotatable about a shaft located slightly in front of the axle 9 of the rear wheels 6. Said rear flap has a drive-up surface 10 and a surface 11 located in front of the rotary shaft 8. When the rear flap 7 is turned down, an edge 12 thereof comes to rest on the road surface 13, and a wheel can be driven over the surface 10 onto the trolley, whereupon the flap 7 begins rotate into the illustrated position as soon as the wheel reaches the surface 11. The edge 12 and another edge 14 rest, in the turned-down position, on the road surface 13, the rear wheels 6 then being slightly removed from the road surface 13, so that the trolley cannot roll away.

The trolley further comprises a front flap 15 hingedly supported around an axle 16 and extending on both sides of said axle 16. A wheel driven onto the trolley comes to be located in a depressed portion 17 of the frame 1, and then rests against the rearmost surface portion 18 of the flap 15 which is thereby turned upward, so that the front portion 19 thereof likewise moves toward the tyre. The wheel is then held fast between the both flaps 7 and 15.

When the support members 7 and 15 are raised, they adjust to the dimensions of the wheel. In order to maintain this setting, the flaps 7 and 15 are provided with pawls 20 and 21, respectively, which cooperate with teeth 22 and 23, respectively, rigidly attached to the frame 1 and which are provided with pressure springs 24 and 25 resp. When the flaps are turned up, the pawls 20 and 21 are moved along the corresponding teeth 22 and 23, respectively, with the result that the position last assumed is secured. After the vehicle has been elevated in order to change the wheel, these pawls can be disengaged again from the teeth.

The front flap 15 is further provided with a plurality of rollers 26, supported in a freely rotatable manner on axles 27 oriented perpendicularly to the longitudinal median plane 3 of the trolley. When the wheel is a driven wheel, it will normally be held by friction against the rear flap 7 and possibly against wall portions of the depressed portion 17, so that only the other wheel will provide the drive. When there is excessive acceleration of the engine, the wheel will tend to disengage itself from the rear flap 7 and to start to rotate, but this rotation is accommodated by the rollers 26, so that any tendency of the wheel to roll out of the trolley is suppressed.

As can be seen from Fig. 2, a plurality of parallel rows of rollers 26 can be provided, of which in particular the outer rollers 26' are conically shaped, so that they contribute to the centering of the wheel because they grip the tyre portions located laterally of the tread.

## Claims

1. A wheel trolley for a wheel of a motor vehicle, comprising a frame with at least one front wheel and two rear wheels, a hinged front flap and a hinged rear flap, said flaps being adapted to bear, in the raised position, against the tyre of a wheel driven on said frame, the rear flap being adapted to be swung downwards and then forming a drive-on ramp for said wheel, said rear flap, when said wheel rolls past the hinge axis, swinging towards the raised position, said wheel then contacting the part of said front flap behind its hinge axis so that said flap will swing towards its raised position, **characterised** in that said flaps (7,15) are provided with pawls (20,21) which, when swinging upwards the flap in question (7,15), will engage corresponding pawl teeth (22,23) in order to lock said flaps (7,15) in a position adapted to said wheel.

2. The wheel trolley of claim 1, **characterised** in that said front flap (15) is provided with freely rotatable rollers (26), at least a part thereo being adapted to contact the tyre of said wheel.

3. The wheel trolley of claim 2, **characterised** in that several parallel rows of rollers (26) are provided, the outer ones (26') thereof being conically shaped, the narrower part thereof being directed towards the longitudinal median plane (3) of said frame (1).

_Fig. 1._

_Fig. 2._

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 250 009 (SMEITINK) <br> * Page 6, line 28; page 7, lines 1-24 * <br> & NL-A-86 001 172 | 1 | B 66 F 7/24 |
| Y,D | | | |
| Y | DE-C- 703 593 (MÜLLER) <br> * Page 2, lines 34-41 * | 1 | |
| A | US-A-2 198 438 (D.R. KNAPP) <br> * Page 2, left-hand column, lines 1-53; page 2, right-hand column, lines 38-54 * | 2 | |
| A | NL-A- 71 565 (DE BEER) | | |
| A | FR-E- 59 809 (CUMET) | | |
| A | FR-A-2 516 022 (MURILLO) | | |
| A | US-A-1 653 516 (G.L. SMITH et al.) | | |
| A | GB-A- 343 772 (BOCLET) | | TECHNICAL FIELDS SEARCHED (Int. Cl.4) |
| A | US-A-4 125 029 (KREZAK) | | B 66 F <br> B 60 S |
| A | US-A-4 687 070 (RICCIARDI) | | |

The present search report has been drawn up for all claims

| Place of search | Date of completion of the search | Examiner |
|---|---|---|
| THE HAGUE | 13-06-1989 | VAN DEN BERGHE E.J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)